# EUROPÄISCHE PATENTSCHRIFT

(11) **EP 3 713 779 B1**
(45) Veröffentlichungstag und Bekanntmachung des Hinweises auf die Patenterteilung: **09.02.2022**
(21) Anmeldenummer: 18808265.5
(22) Anmeldetag: 19.11.2018
(51) Int. Cl.: F16C 19/36, F16C 19/54, F16C 33/76, F16C 33/78, F16J 15/38, F16J 15/32, F16J 15/10, F16J 15/34, B60C 23/00, F16C 41/00, B60B 27/00

(54) **DICHTUNGSANORDNUNG FÜR EINE DREHDURCHFÜHRUNG EINES RADLAGER EINES KRAFTFAHRZEUGS**
SEAL ASSEMBLY FOR A ROTARY FEED-THROUGH OF A WHEEL BEARING OF A MOTOR VEHICLE
ENSEMBLE D'ÉTANCHÉITÉ DESTINÉ À UN PASSAGE TOURNANT D'UN PALIER DE ROUE D'UN VÉHICULE AUTOMOBILE

(30) Priorität: 21.11.2017 DE 102017127427
(43) Veröffentlichungstag der Anmeldung: 30.09.2020
(73) Patentinhaber: Schaeffler Technologies AG & Co. KG, 91074 Herzogenaurach (DE)
(72) Erfinder: SCHÄFER, Marc-André, 97532 Üchtelhausen (DE); FLINT, Andreas, 50678 Köln (DE); MELLER, Dieter, 53347 Alfter (DE)
(74) Vertreter: Michalski Hüttermann & Partner Patentanwälte mbB
(86) Internationale Anmeldenummer: PCT/EP2018/081764
(87) Internationale Veröffentlichungsnummer: WO 2019/101686

(56) Entgegenhaltungen:
- EP-A1- 2 842 769
- EP-A2- 2 952 365
- WO-A1-2017/152996
- DE-A1-102007 054 887
- US-A- 2 820 653

## Beschreibung

Die Erfindung betrifft eine Dichtungsanordnung für eine Drehdurchführung eines Radlagers eines Kraftfahrzeugs, mit deren Hilfe in dem Radlager eine Drehdurchführung ausgebildet werden kann, um in radialer Richtung ein Druckfluid durch das Radlager hindurchzuleiten, insbesondere um einen Reifendruck eines Reifens des Kraftfahrzeugs einzustellen.

Die Reifen von Kraftfahrzeugen haben je nach Untergrund und nach Beladung einen unterschiedlichen, optimalen Reifendruck. Beispielsweise bei losem Untergrund, Sand, Matsch oder ähnliches wird eine möglichst gute Traktion benötigt, die mit einem Reifen mit einem sehr geringen Reifendruck erreicht werden kann. Auf einem ebenen Untergrund wie beispielsweise einer Landstraße ist auch bei einem höheren Reifendruck eine ausreichende Traktion erreicht, wobei ein Reifen mit einem hohen Reifendruck zu weniger Reibung und einem geringeren Spritverbrauch führt. Für einen voll beladenen Lastkraftwagen fällt der optimale Reifendruck höher aus als für eine Leerfahrt. Lastkraftwagen, die im Gelände oder auf Baustellen fahren, wie beispielsweise einem Kipper, sind in der Regel entweder vollkommen leer oder komplett beladen unterwegs, so dass insbesondere für solche Lastkraftwagen der Unterschied zwischen den jeweils optimalen Reifendrücken besonders groß ist.

Aus DE 10 2015 212 641 A1 ist eine Dichtungsanordnung für ein Radlager eines Kraftfahrzeugs bekannt, bei der die Dichtungsanordnung einen durch axial verlagerbare Dichtungselemente begrenzten Druckraum zur Durchfuhr von Druckluft in radialer Richtung aufweist, wobei die Dichtungselemente durch den Druck der Druckluft gegen jeweils ein relativ drehbares Ringelement des Radlagers gedrückt werden, um einen Dichtkontakt herzustellen. Mit Hilfe eines derartigen Radlagers kann ein im Kraftfahrzeug vorgesehenes pneumatisches System den Reifendruck des Kraftfahrzeugs auf den in der aktuellen Situation optimalen Reifendruck anpassen.

Aus der WO 2017/152996 A1 ist eine Lageranordnung und ein Verfahren zum Zusammenbau einer Lageranordnung an einer Nabe bekannt, bei der ein zentrales Reifenbefüllungssystem, mit zwei Dichtungsvorrichtungen und einem Luftdurchgang, vorgesehen ist. Die Dichtungsvorrichtungen sind dabei zwischen einem Teil der Nabe und einem Teil der Lageranordnung eingespannt und gegen einen in Radialrichtung angeordneten statischen Innenring dichtend verpresst. Der Luftdurchgang erstreckt sich in radialer Richtung zwischen den Dichtungsvorrichtungen von dem Innenring zum besagten Teil der Nabe, wobei Druckluft von einer statischen Achse über den Luftdurchgang in die Nabe und letztendlich in den Reifen geleitet wird. Weitere Drehdurchführungen sind aus DE 10 2007 054 887 A1, EP 2 952 365 A2, US 2 820653 A und EP 2 842 769 A1 bekannt.

Es besteht ein ständiges Bedürfnis die Leckage einer Drehdurchführung für ein Radlager zu verringern.

Es ist die Aufgabe der Erfindung Maßnahmen aufzuzeigen, die eine Drehdurchführung für ein Radlager mit einer geringen Leckage ermöglichen.

Die Lösung der Aufgabe erfolgt erfindungsgemäß durch eine Dichtungsanordnung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Dichtungsanordnung für eine Drehdurchführung eines Radlager eines Kraftfahrzeugs, insbesondere Lastkraftfahrzeug, vorgesehen mit einem eine Druckkammer begrenzenden Dichtungshalter, wobei der Dichtungshalter einen mit einer Druckquelle und der Druckkammer kommunizierbaren Einlasskanal und einen mit der Druckkammer und einem Drucknutzraum, insbesondere Reifenschlauch eines Kraftfahrzeugreifens, kommunizierbaren Auslasskanal aufweist, und einer im Wesentlichen koaxial zu einer Drehachse des Radlagers angeordneten Dichtungseinheit zur Herstellung eines Dichtkontakts mit einem relativ zu dem Dichtungshalter drehbaren Dichtpartner, wobei die Dichtungseinheit eine axiale Stirnseite der Druckkammer begrenzt und relativ zu dem Dichtungshalter in axialer Richtung verlagerbar und/oder elastisch verformbar ausgestaltet ist, wobei der Strömungsquerschnitt des Auslasskanals dimensioniert ist bei einer Förderung eines Druckfluids von der Druckquelle zu dem Drucknutzraum in der Druckkammer einen Staudruck zum dichtenden Anpressen der Dichtungseinheit an den Dichtpartner herbeizuführen.

Der Dichtungshalter kann mit einem Innenring des Radlagers drehfest verbunden sein, während der Dichtpartner mit einem Außenring des Radlagers drehfest verbunden ist, oder umgekehrt. Durch den Dichtkontakt der Dichtungseinheit an dem Dichtpartner kann eine Abdichtung des Innenrings gegenüber dem Außenring erfolgen. Zwischen der Dichtungseinheit und dem Dichtpartner kann im laufenden Betrieb eine Relativdrehung stattfinden, die insbesondere bei der Dichtungseinheit an der der Kontaktstelle mit dem Dichtpartner zu einem abrasiven Verschleiß führen kann. Durch die relative Bewegbarkeit der Dichtungseinheit zum Dichtungshalter in axialer Richtung kann die Dichtungseinheit den Verschleiß nachstellen, indem die Dichtungseinheit um das Ausmaß des Verschleißes weiter axial auf den Dichtpartner zu verlagert und/oder verformt wird. Da die Dichtungseinheit einen Teil der Druckkammer begrenzt, kann an einer zur Druckkammer weisenden und von dem Dichtpartner weg weisenden Rückseite der Dichtungseinheit der Druck des Druckfluids, insbesondere Druckluft, anliegen, so dass der Druck des Druckfluids selber die Dichtungseinheit zum Nachstellen des verschleißbedingten axialen Fehlabstands axial verlagern kann. Eine durch Verschleißeffekte der Dichtungseinheit verursachte Leckage des Druckfluids an der Dichtkontaktstelle zwischen der Dichtungseinheit und dem Dichtpartner vorbei kann dadurch vermieden werden. Da die im Wesentlichen ringförmige Dichtungseinheit an ihrer Axialseite gegen den Dichtpartner drückt, ist bei einem abrasiven Verschleiß lediglich ein axialer Versatz der Dichtungseinheit ausreichend, um den Verschleiß nachzustellen. Insbesondere ist es dadurch vermieden ein ringförmiges Bauteil zur Verschleißnachstellung aufzuweiten. Dies ermöglicht es an der Dichtkontaktstelle besonders verschleißfeste Materialen vorzusehen, die üblicherweise eine schlechte Elastizität aufweisen und kaum aufgeweitet werden können. Anstatt einer in radialer Richtung weisenden Mantelfläche kann eine in axialer Richtung weisende Stirnseite der ringförmigen Dichtungseinheit angepresst werden. Im Vergleich zu einer in radialer Richtung wirkenden Dichtungseinheit kann dadurch ein geringerer Verschleiß erreicht werden. Das für die Dichtungseinheit verwendete mindestens eine Material ist insbesondere hitzebeständig bis zu einer Temperatur von beispielsweise 260°C. Das Material weist insbesondere eine Dehnbarkeit auf, die ausreichend ist, um gegen im Betrieb zu erwartende Stöße unempfindlich zu sein. Beispielsweise weist das jeweilige Material eine Dehnung von 5% bis 10% auf. Der thermische Ausdehnungskoeffizient des jeweiligen Materials entspricht insbesondere im Wesentlichen dem thermischen Ausdehnungskoeffizient des für die Lagerringe des Radlagers verwendeten Materials, insbesondere Stahl.

Wenn ein Druck in dem Drucknutzraum erhöht werden soll, kann zusätzliches, insbesondere kompressibles, Druckfluid über den Einlasskanal zugeführt werden. Dieses Druckfluid wird von dem Auslasskanal jedoch zunächst in der Druckkammer gestaut. Hierzu ist beispielsweise der Strömungsquerschnitt des Auslasskanals entsprechend kleiner als der Strömungsquerschnitt des Einlasskanals. Falls mehrere Auslasskanäle für die selbe Druckkammer vorgesehen sind, gilt für diesen Vergleich die Summe der Strömungsquerschnitte sämtlicher Auslasskanäle. Falls mehrere Einlasskanäle für die selbe Druckkammer vorgesehen sind, gilt für diesen Vergleich die Summe der Strömungsquerschnitte sämtlicher Einlasskanäle. Der Auslasskanal beziehungsweise die Summe mehrerer Auslasskanäle kann als Drossel wirken, die nur einen zeitverzögerten Ausgleich des Druckes vor und hinter dem Auslasskanal zulässt. Bevor das Druckfluid an die Dichtkontaktstelle zwischen der Dichtungseinheit und dem Dichtpartner gelangen kann, wird das Druckfluid in der Druckkammer zurückgehalten, wodurch sich der Druck in der Druckkammer erhöht. Der Auslasskanal kann in der Art einer Drossel beim Befüllen des Drucknutzraums das Druckfluid in der Druckkammer stauen und einen Staudruck erzeugen. Die kinetische Energie des Druckfluids wird durch die Drosselwirkung des Einlasskanals in eine Erhöhung des statischen Drucks in der Druckkammer umgewandelt, wobei sich gegebenenfalls die Dichte des Druckfluids in der Druckkammer erhöhen kann. Der erhöhte Druck in der Druckkammer führt zu einer stärkeren Anpressung der Dichtungseinheit an dem Dichtpartner, wodurch sich die Dichtwirkung erhöht. Wenn das Druckfluid schließlich über den Auslasskanal die Druckkammer verlässt und im weiteren Strömungsverlauf auch die Dichtkontaktstelle zwischen der Dichtungseinheit und dem Dichtpartner erreicht, liegt an der Dichtkontaktstelle bereits eine für den erhöhten Druck ausreichende Dichtwirkung an, so dass durch die frühzeitige Erreichung der für den erhöhten Druck erforderlichen Dichtwirkung, bevor der erhöhte Druck an der Dichtkontaktstelle aufgebaut ist, eine Leckage vermieden werden kann. Da die Dichtungseinheit einen Teil der Druckkammer begrenzt, kann die frühzeitige Erhöhung der Dichtwirkung automatisch durch den an dem Einlasskanal angelegten Druck erfolgen. Wenn ein Druck in dem Drucknutzraum reduziert werden soll, kann der von der Druckquelle an dem Einlasskanal anliegende Druck verringert werden. Dadurch verringert sich auch der Druck in der Druckkammer entsprechend. Durch die Drosselwirkung des Auslasskanals wird das in dem Drucknutzraum vorliegende Druckfluid zunächst etwas zurückgehalten, so dass sich über einen gewissen Zeitraum in der Druckkammer zunächst ein geringerer Druck als in dem Drucknutzraum einstellt. Dadurch kann sich die Anpresskraft der Dichtungseinheit an dem Dichtpartner schnell verringern, wodurch unnötiger Verschleiß vermieden wird. Da das Druckfluid bevorzugt durch den Auslasskanal abströmt können die an der Dichtkontaktstelle vorliegenden Anteile des Druckfluids in der Art einer Saugstrahlpumpe abgesaugt beziehungsweise mitgerissen werden, so dass die frühzeitige Reduzierung der Anpresskraft der Dichtungseinheit nicht zu einer Leckage oder zumindest nur zu einer geringen, insbesondere vernachlässigbaren, Leckage führt. Durch die Drosselwirkung des Auslasskanals kann über den sich in der Druckkammer einstellenden Druck die Dichtwirkung der Dichtungseinheit frühzeitig auf einen sich ändernden Solldruck angepasst werden, so dass durch die Dichtungsanordnung bei einem geringen Verschleiß eine Drehdurchführung für ein Radlager mit einer geringen Leckage ermöglicht ist.

Der Einlasskanal und der Auslasskanal können in radialer Richtung zueinander beabstandet sein, so dass das Druckfluid eine signifikante Strecke in radialer Richtung durch die Druckkammer fließen muss. Dies führt zu einer größeren Verweilzeit des Druckfluids in der Druckkammer. Der Einlasskanal und der Auslasskanal können insbesondere im Wesentlichen in axialer Richtung verlaufen, wobei die Strömungsrichtungen entgegengesetzt ausgerichtet sind. Das Druckfluid muss dadurch auf seinem Strömungsweg von dem Einlasskanal zu dem Auslasskanal über die Druckkammer um ca. 180° umgelenkt werden. Dies führt zu einer größeren Verweilzeit des Druckfluids in der Druckkammer sowie zu einem zusätzlichen Drosseleffekt. Der Dichtungshalter kann insbesondere einen im Wesentlichen radial verlaufenden Verbindungskanal aufweisen, der mit einem radial verlaufenden Einlass eines der Lagerringe des Radlagers kommunizieren kann. Beispielsweise ist ein Innenring des Radlagers mit einer Hohlwelle verbunden, über welche die Druckquelle oder der Drucknutzraum angeschlossen sein kann. Die Hohlwelle kann hierzu beispielsweise eine Querbohrung aufweisen, die insbesondere über ein in der Hohlwelle und/oder in dem Innenring ausgebildete in Umfangsrichtung umlaufende Nut mit der Dichtungsanordnung kommunizieren kann. Der Außenring des Radlagers kann mit einer Nabe verbunden sein oder die Nabe ausbilden. Die Nabe kann insbesondere eine Radnabe ausbilden, mit der ein Reifen des Kraftfahrzeugs verbunden sein kann. Die Nabe und/oder der Außenring können einen im Wesentlichen radial verlaufen Auslass aufweisen, der mit dem Auslasskanal der Dichtungsanordnung kommunizieren kann. Der Dichtungshalter kann mit einem der Lagerringe des Radlagers über ein Dichtelement, insbesondere eine O-Ring-Dichtung oder ein mit Gummi umspritztes Blechumformteil, drehfest und fluiddicht verbunden sein. Der Dichtpartner kann mit dem anderen Lagerring des Radlagers über ein Dichtelement, insbesondere eine O-Ring-Dichtung oder ein mit Gummi umspritztes Blechumformteil, drehfest und fluiddicht verbunden sein oder von diesem Lagerring ausgebildet sein. Das Dichtelement ist insbesondere konzentrisch zu der Drehachse des Radlagers angeordnet. Die Drehachse des Radlagers fällt mit der Drehachse der Dichtungsanordnung zusammen. Der Dichtungshalter kann zu dem anderen Lagerring des Radlagers, mit dem der Dichtungshalter nicht befestigt ist, beabstandet positioniert sein, so dass ein Schleifkontakt zwischen dem Dichtungshalter und dem relativ zum Dichtungshalter drehbaren Lagerring vermieden ist. Die Dichtkontaktstelle zwischen der Dichtungseinheit und dem Dichtpartner ist insbesondere mit einem Schmiermittel, vorzugsweise Fett, geschmiert, so dass ein abrasiver Verschleiß deutlich reduziert sein kann. Insbesondere ist die zur Dichtungseinheit weisende Oberfläche des Dichtpartners zumindest im Bereich der Dichtkontaktstelle uneben ausgeführt. Beispielsweise ist diese Oberfläche des Dichtpartners durch Glaskugelstrahlen bearbeitet und/oder weist eine entsprechende Rauigkeit und/oder Oberflächenstrukturierung auf. Durch die unebene Oberfläche des Dichtpartners kann vermieden werden, dass das Schmiermittel von der Dichtungseinheit abgestreift wird.

Die Dichtungseinheit weist einen im Wesentlichen koaxial zu der Drehachse des Radlagers angeordneten direkt an dem Dichtpartner anliegbaren Abstützring zur Abtragung axialer Kräfte und einen im Wesentlichen koaxial zu der Drehachse des Radlagers angeordneten direkt an dem Dichtpartner anliegbaren Dichtring zur Bereitstellung eines Dichtkontakts mit dem Dichtpartner durch eine elastische Verformung auf. Der Abstützring und/oder der Dichtring können insbesondere in einem, vorzugsweise aus einem elastomeren Material hergestellten, Haltering der Dichtungseinheit eingesetzt sein. Der Haltering kann beispielsweise durch den in der Druckkammer anliegenden

Druck elastisch verformt werden und den Abstützring und/oder den Dichtring gegen den Dichtpartner drücken, während der Abstützring und/oder der Dichtring aus einem anderen Material hergestellt sein können. Insbesondere ist der Abstützring aus einem besonders druckfesten und/oder verschleißfesten Material hergestellt. Beispielsweise ist der Abstützring aus einem Polyamidimide (PAI) hergestellt, der zur verbesserten Verschleißfestigkeit einen erhöhten Graphitanteil aufweisen kann. Der Dichtring kann besonders weich sein und dadurch eine besonders gute Abdichtung erreichen. Der Dichtring ist beispielsweise aus Polytetrafluorethylen (PTFE) hergestellt. Der Abstützring kann einen Großteil der Anpresskräfte abtragen, so dass an dem Dichtring geringere Kräfte angreifen und das im Vergleich zu dem Abstützring weichere Material des Dichtrings nicht so leicht verschleißt. Wenn der Haltering aus einem elastomeren Material hergestellt ist, kann die Dichtungseinheit bei der Montage leicht durch eine zum Dichtpartner weisende verjüngende Öffnung des Dichtungshalters gepresst werden, um die Dichtungseinheit bis zur Montage des Dichtpartners verliersicher in dem Dichtungshalter zurückzuhalten. Alternativ kann die zum Dichtpartner weisende Öffnung des Dichtungshalters in radialer Richtung so groß wie die radiale Erstreckung der Dichtungseinheit sein, wobei insbesondere zwischen dem Dichtungshalter und der Dichtungseinheit eine Spielpassung ausgebildet ist, die eine leichte axiale Verschiebbarkeit der Dichtungseinheit in dem Dichtungshalter ermöglicht.

Der Abstützring und der Dichtring sind in einem im Wesentlichen koaxial zu der Drehachse des Radlagers angeordneten Haltering zueinander in radialer Richtung beabstandet oder in radialer Richtung aneinander anliegend aufgenommen. Wenn der Abstützring und der Dichtring zueinander beabstandet angeordnet sind, können diese Ringe jeweils separat in einer eigenen Aufnahmetasche des Halterings der Dichtungseinheit aufgenommen sein. Die einzelnen Ring sind dadurch voneinander entkoppelt und getrennt, so dass eine genseitige Blockierung vermieden ist. Dies kann einen besonders geringen Verschleiß und eine hohe Lebensdauer selbst bei einer ungeschmierten Dichtkontaktstelle ermöglichen. Insbesondere wenn die Dichtkontaktstelle geschmiert ist können die Ringe aneinander anliegend in einer gemeinsamen Aufnahmetasche des Halterings aufgenommen sein. Dadurch wird in radialer Richtung im Bereich der Dichtkontaktstelle Bauraum geschaffen, in dem mindestens ein weiterer Abstützring und/oder Dichtring vorgesehen werden kann. Insbesondere sind der mindestens eine Abstützring und der mindestens eine Dichtring alternierend angeordnet. Die Fläche für den Dichtkontakt zwischen der Dichtungseinheit und dem Dichtpartner kann dadurch erhöht werden, wodurch bei geringeren erforderlichen Anpresskräften eine höhere Dichtwirkung erreicht werden kann. Dies ermöglicht bei einem geringen Verschleiß eine hohe Dichtwirkung.

Besonders bevorzugt ist zwischen dem, insbesondere aus einem elastomeren Material hergestellten, Haltering einerseits und dem Abstützring und/oder dem Dichtring andererseits eine Entlastungsnut ausgebildet. Durch die Entlastungsnut kann beispielsweise der Abstützring und/oder der Dichtring innerhalb der Aufnahmetasche des Halterings etwas kippen, wodurch sich der Abstützring und/oder der Dichtring auch bei einem ungleichmäßigen Verschleiß leichter automatisch an dem Dichtpartner ausrichten kann. Zudem kann der Haltering bei einer elastischen Verformung durch den in der Druckkammer anliegenden Druck in die Entlastungsnut ausweichen, so dass ein Blockieren der Dichtungseinheit innerhalb des Dichtungshalters vermieden werden kann.

Insbesondere ist der Abstützring und/oder der Dichtring in einer elastischen Aufnahmetasche der Dichtungseinheit aufgenommen ist. Selbst wenn der Haltering der Dichtungseinheit nicht aus einem elastomeren Material hergestellt sein sollte, kann zumindest die Aufnahmetasche elastisch nachgeben, indem beispielsweise eine elastomere Innenbeschichtung der Aufnahmetasche elastisch verformt werden kann. Durch die elastischen Aufnahmetasche kann beispielsweise der Abstützring und/oder dem Dichtring innerhalb der Aufnahmetasche des Halterings etwas kippen, wodurch sich der Abstützring und/oder der Dichtring auch bei einem ungleichmäßigen Verschleiß leichter automatisch an dem Dichtpartner ausrichten kann. Unnötiger Verschleiß wird dadurch vermieden.

Vorzugsweise bildet die Dichtungseinheit im an dem Dichtpartner angepressten Zustand zwischen einem Teil der Dichtungseinheit und dem Dichtpartner einen Gegendruckspalt aus, wobei der Gegendruckspalt, insbesondere stromabwärts zum Auslasskanal, mit dem Auslasskanal und/oder mit dem Drucknutzraum kommuniziert. Zumindest im Bereich des Gegendruckspalts ist ein Anliegen der Dichtungseinheit an dem Dichtpartner nicht vorgesehen. Dies ermöglicht es dem Druckfluid in den Gegendruckspalt zu gelangen und eine der Anpressrichtung der Dichtungseinheit an den Dichtpartner entgegengesetzte Kraft der Dichtungseinheit aufzuprägen. Der Anpressdruck kann dadurch, insbesondere auf das erforderliche Minimum, reduziert werden, so dass ein Verschleiß durch eine unnötig hohe Anpresskraft vermieden werden kann. Wenn der Druck im Drucknutzraum erhöht werden soll, kann die Dichtungseinheit frühzeitig mit einem gegebenenfalls etwas zu hohen Druck gegen den Dichtpartner gepresst werden, damit während des Zeitraums bis ein Druckausgleich zwischen dem von der Druckquelle bereitgestellten Druck und dem Druck in dem Drucknutzraum eine ausreichende im Wesentlichen leckagefreie Abdichtung vorgesehen ist. Durch den allmählichen Druckaufbau im Drucknutzraum wird stromabwärts des Auslasskanals auch der Druck in dem Gegendruckspalt aufgebaut, wodurch die Anpresskraft auf einen geringeren aber ausreichenden Druck reduziert werden kann. Zur Einstellung einer gewünschten Anpresskraft im stationären Zustand kann die Fläche der im Gegendruckspalt zum Dichtpartner weisenden Vorderseite der Dichtungseinheit in Abhängigkeit von der Fläche der die Druckkammer begrenzenden Rückseite der Dichtungseinheit geeignet gewählt werden, damit sich die gewünschten Anpresskraft als resultierende Kraft der an der Dichtungseinheit angreifenden und einander entgegen gerichteten Druckrichtungen in der Druckkammer und in dem Gegendruckspalt ergibt. Durch die mit Hilfe der Drosselwirkung des Auslasskanals erreichte Zeitverzögerung beim Druckaufbau in dem Gegendruckspalt kann vermieden werden, dass in der instationären Phase der Druckerhöhung durch Druckschwankungen im von der Druckquelle angelegten Druck Undichtigkeiten auftreten, die zu einer Leckage von Druckfluid führen können. Zusätzlich ist es möglich einen, insbesondere in beide radialen Richtungen abgeschlossenen im Wesentlichen taschenförmigen, weiteren Gegendruckspalt vorzusehen, der direkt mit der Druckkammer kommuniziert, wie in DE 2015 212 641 A1 beschrieben, auf deren Inhalt als Teil der Erfindung Bezug genommen wird.

Besonders bevorzugt ist die Dichtungseinheit unterhalb eines Grenzdrucks p in der Druckkammer von p ≤ 2,0 bar, insbesondere p ≤ 1,8 bar, vorzugsweise p ≤ 1,5 bar und besonders bevorzugt p ≤ 1,2 bar von dem Dichtpartner abgehoben positioniert. Bei einem besonders niedrigen Druck in der Druckkammer, der insbesondere unterhalb des minimal vorgesehenen Reifendrucks für den Reifen liegt, kann ein Dichtkontakt zwischen der Dichtungseinheit und dem Dichtpartner aufgehoben sein. Dies führt zu einem entsprechend geringeren Anpressdruck der Dichtungseinheit an dem Dichtpartner, wenn in der Druckkammer ein gewünschter Solldruck für den Drucknutzraum anliegt. Der Verschleiß der Dichtungseinheit kann dadurch reduziert werden.

Insbesondere ist die Dichtungseinheit zur Abdichtung in einer ersten Axialrichtung vorgesehen, wobei ein zum Dichtungshalter symmetrisch, spiegelbildlich und/oder analog ausgestalteter weiterer Dichtungshalter und eine zur Dichtungseinheit symmetrisch, spiegelbildlich und/oder analog ausgestaltete weitere Dichtungseinheit zur Abdichtung in einer zur ersten Axialrichtung entgegengesetzten zweiten Axialrichtung vorgesehen sind, wobei insbesondere zwischen dem Dichtungshalter und dem weiteren Dichtungshalter ein mit dem mindestens einen Einlasskanal und der Druckquelle kommunizierbarer Verbindungskanal ausgebildet ist. Die mit Hilfe der Dichtungsanordnung in dem Radlager ausbildbare Drehdurchführung ist dadurch in beiden Axialrichtungen ausreichend und verschleißarm abgedichtet. Die vorstehend für den Dichtungshalter und die Dichtungseinheit erläuterten Aus- und Weiterbildungen gelten analog für den weiteren Dichtungshalter und die weitere Dichtungseinheit. Insbesondere basiert der weitere Dichtungshalter und die weitere Dichtungseinheit auf einer spiegelbildlichen Ausgestaltung des Dichtungshalters und der Dichtungseinheit. Der Dichtungshalter und der weitere Dichtungshalter können als separate Bauteile oder einstückig ausgestaltet sein. Wenn die Dichtungsanordnung für ein zweireihiges Radlager verwendet werden soll, ist es möglich, dass die Dichtungseinheit zum einen Wälzlager und die weitere Dichtungseinheit zum anderen Wälzlager des zweireihigen Radlagers hin abdichtet. Zudem kann der Dichtungshalter und der weitere Dichtungshalter zwischen den Wälzlagern axial fixiert, insbesondere im Wesentlichen verklemmt sein. Insbesondere ist es möglich, dass an den axialen Stirnseiten des Dichtungshalters und des weiteren Dichtungshalters jeweils eine Aussparung vorgesehen ist, die zusammen einen Verbindungskanal zur Anbindung der in dem Dichtungshalter und in dem weiteren Dichtungshalter jeweils ausgebildeten Einlasskanal mit dem Einlass des Radlagers ausbilden. Entsprechend kann an den aufeinander zu weisenden axialen Stirnseiten der in axialer Richtung gegenüberliegenden Lagerringe der beiden Wälzlager des zweireihigen Radlagers jeweils eine Aussparung vorgesehen sein, die zusammen den Einlass beziehungsweise den Auslass ausbilden. Der Dichtungshalter und der weitere Dichtungshalter können als separate voneinander trennbare Bauteile ausgestaltet sein. Insbesondere sind der Dichtungshalter und der weitere Dichtungshalter einstückig ausgestaltet.

Die Erfindung betrifft ferner ein Radlager zur Lagerung eines Kraftfahrzeugreifens eines Kraftfahrzeugs, insbesondere Lastkraftfahrzeug, mit einem, insbesondere inneren, ersten Lagerring, einem, insbesondere äußeren, zweiten Lagerring, zwischen dem ersten Lagerring und dem zweiten Lagerring angeordneten Wälzkörpern zur relativ drehbaren Lagerung des ersten Lagerrings zum zweiten Lagerring und einer zwischen dem ersten Lagerring und dem zweiten Lagerring angeordneten Dichtungsanordnung, die wie vorstehend beschrieben aus- und weitergebildet sein kann, zur radialen Durchführung eines Druckfluids, wobei der Dichtungshalter mit dem ersten Lagerring und der Dichtpartner mit dem zweiten Lagerring drehfest befestigt ist und wobei der erste Lagerring einen mit dem Einlasskanal und der Druckquelle kommunizierbaren Einlass und der zweite Lagerring einen mit dem Auslasskanal und dem Drucknutzraum kommunizierbaren Auslass aufweist. Durch die Drosselwirkung des Auslasskanals kann über den sich in der Druckkammer einstellenden Druck die Dichtwirkung der Dichtungseinheit frühzeitig auf einen sich ändernden Solldruck angepasst werden, so dass durch die Dichtungsanordnung bei einem geringen Verschleiß eine Drehdurchführung für ein Radlager mit einer geringen Leckage ermöglicht ist.

Das Radlager kann für verschiedene Anwendungen auch außerhalb einer Anwendung als Radlager für einen Reifen eines Kraftfahrzeugs verwendet werden. Für viele Einsatzgebiete ist es ausreichend, wenn der Innendurchmesser eines der Wälzlager des zumindest zweireihigen Radlagers oder einreihigen Radlagers zwischen einschließlich 50 mm und einschließlich 160 mm liegt, wobei insbesondere der Außendurchmesser des Wälzlager zwischen einschließlich 90 mm und einschließlich 230 mm liegt. Vorzugsweise liegt die axiale Breite des Wälzlager zwischen einschließlich 81 mm und einschließlich 116 mm. Die radiale Erstreckung des Radlagers ist dadurch groß genug, um die Dichtungsanordnung aufzunehmen und die Dichtungsanordnung noch kostengünstig fertigen und montieren zu können. Wenn für die zwei Wälzlager ein gemeinsamer Lagerring verwendet wird, der insbesondere den Dichtungshalter der Dichtungsanordnung aufnimmt, kann eine entsprechend doppelt so große axiale Breite für den für beide Wälzlager vorgesehenen Lagerring vorgesehen sein. Zur leichteren Montage kann der Lagerring eine etwas größer bemessene axiale Breite aufweisen, die beispielsweise zwischen einschließlich 165 mm und einschließlich 250 mm liegt.

Vorzugsweise sind ein weiterer erster Lagerring, ein weiterer zweiter Lagerring und zwischen dem weiteren ersten Lagerring und dem weiteren zweiten Lagerring angeordnete weitere Wälzkörper zur relativ drehbaren Lagerung des weiteren ersten Lagerrings zum weiteren zweiten Lagerring vorgesehen sind, wobei die Dichtungsanordnung zwischen dem ersten Lagerring und dem weiteren ersten Lagerring axial fixiert ist. Das Radlager kann zweireihig ausgestaltet sein, wobei die Dichtungsanordnung zwischen den beiden separaten Wälzlager des zweireihigen Radlagers mit einem möglichst geringen Spiel von beispielsweise 200 µm durch Axialanschläge der Wälzlager axial fixiert sein kann. Hierbei kann insbesondere der Dichtungshalter und der weitere Dichtungshalter aufeinander zu gepresst werden, so dass eine Strömung des Druckfluids zwischen den Dichtungshaltern an den Druckkammern der Dichtungshalter vorbei vermieden werden kann. Insbesondere sind die Wälzlager als Schrägkugellager und/oder Kegelrollenlager ausgestaltet. Dadurch können die Lagerringe, welche die Dichtungsanordnung im Wesentlichen verklemmen und/oder axial fixieren, im laufenden Betrieb aufeinander zu gedrückt werden und die Dichtungsanordnung automatisch im Wesentlichen spielfrei verklemmen und/oder axial fixieren.

Besonders bevorzugt ist zwischen dem ersten Lagerring und dem zweiten Lagerring ein, insbesondere als Kassettendichtung oder Radialwellendichtring ausgestalteter, Dichtkörper zum Schutz der Wälzkörper vor äußeren Verschmutzungen vorgesehen, wobei die Dichtungsanordnung in axialer Richtung zwischen den Wälzkörpern und dem Dichtkörper angeordnet ist, wobei insbesondere die Dichtungsanordnung an dem Dichtkörper axial abgestützt ist und/oder der Dichtkörper den Dichtpartner ausbildet. Der Dichtkörper kann bereits das Radlager zu einer Axialseite hin abdichten, so dass insbesondere Staub und sonstige Schmutzpartikel im Wesentlichen nicht in das Radlager eindringen können. Die Dichtungsanordnung kann hierbei eine zusätzliche Barriere ausbilden, die das Eindringen von Verschmutzungen in den Bereich der Wälzkörper verhindern kann. Hierbei kann der Dichtkörper zur Abstützung eines der Dichtpartner verwendet werden oder selber den Dichtpartner an dieser Axialseite der Dichtungsanordnung ausbilden. Alternativ kann die Dichtungsanordnung den an einem axialen Ende des Radlagers vorgesehenen Dichtkörper ersetzen, wobei insbesondere der am axialen Ende des Radlagers vorgesehene Dichtpartner an einem in einer Nut eines der Lagerringe des Radlagers eingesetzten Sicherungsring abgestützt sein kann.

Die Erfindung betrifft ferner ein Radlager zur Lagerung eines Kraftfahrzeugreifens eines Kraftfahrzeugs, insbesondere Lastkraftfahrzeug, mit einem, insbesondere inneren, ersten Lagerring, einem, insbesondere äußeren, zweiten Lagerring, zwischen dem ersten Lagerring und dem zweiten Lagerring angeordneten Wälzkörpern zur relativ drehbaren Lagerung des ersten Lagerrings zum zweiten Lagerring, einem zwischen dem ersten Lagerring und dem zweiten Lagerring, insbesondere als Kassettendichtung oder Radialwellendichtring ausgestalteter, Dichtkörper zum Schutz der Wälzkörper vor äußeren Verschmutzungen, einer in radialer Richtung zwischen dem ersten Lagerring und dem zweiten Lagerring und in axialer Richtung zwischen den Wälzkörpern und dem Dichtkörper angeordneten Dichtungsanordnung, die wie vorstehend beschrieben aus- und weitergebildet sein kann, zur radialen Durchführung eines Druckfluids, wobei die Dichtungseinheit zur Abdichtung in einer zu den Wälzkörpern weisenden Axialrichtung vorgesehen ist, wobei die Dichtungsanordnung einen eine weitere Druckkammer begrenzenden weiteren Dichtungshalter und einer im Wesentlichen koaxial zu einer Drehachse des Radlagers angeordneten weiteren Dichtungseinheit zur Herstellung eines Dichtkontakts mit dem relativ zu dem weiteren Dichtungshalter drehbaren Dichtkörper oder einem dem Dichtungskörper zugewandten relativ zu dem weiteren Dichtungshalter drehbaren weiteren Dichtpartner aufweist, wobei die weitere Druckkammer nur mit dem Auslasskanal und dem Drucknutzraum über eine, insbesondere als weiteren Auslasskanal ausgestaltete, einen Staudruck erzeugende Drosselstelle kommuniziert und unterhalb eines Grenzdrucks in der weiteren Druckkammer zwischen der weiteren Dichtungseinheit einerseits und dem Dichtkörper oder dem weiteren Dichtpartner andererseits ein mit dem Auslasskanal und dem Drucknutzraum kommunizierender Leckagespalt zur Abfuhr eines Teils des Druckfluids in den Dichtkörper ausgebildet ist. Das Radlager kann insbesondere wie das vorstehend beschriebene Radlager aus- und weitergebildet sein. Durch die Drosselwirkung des Auslasskanals kann über den sich in der Druckkammer einstellenden Druck die Dichtwirkung der Dichtungseinheit frühzeitig auf einen sich ändernden Solldruck angepasst werden, so dass durch die Dichtungsanordnung bei einem geringen Verschleiß eine Drehdurchführung für ein Radlager mit einer geringen Leckage ermöglicht ist.

Im Vergleich zu einer spiegelbildlich symmetrischen Ausgestaltung des Dichtungshalters und des weiteren Dichtungshalters ist bei dem zum Dichtungskörper weisenden weiteren Dichtungshalter der Einlasskanal verschlossen. Dies führt dazu, dass das in die Druckkammer des weiteren Dichtungshalters strömende Druckfluid zunächst den Auslasskanal des Dichtungshalters und die Drosselstelle des weiteren Dichtungshalters passieren muss. In der Druckkammer des weiteren Dichtungshalters baut sich dadurch erst der gewünschte Solldruck auf, nachdem in der Druckkammer des Dichtungshalters und stromabwärts des Auslasskanals der gewünschte Solldruck bereits erreicht ist. Dadurch kann die weitere Dichtungseinheit erst sehr spät eine ausreichende Dichtwirkung herbeiführen. Dies führt zu einen Zeitraum, in dem zwischen der weiteren Dichtungseinheit und dem zugeordneten Dichtpartner beziehungsweise dem Dichtkörper ein nicht abgedichteter Leckagespalt ausgebildet ist, über den das Druckfluid als Leckagestrom mit einem vergleichbar hohen Druck austreten kann. Dieser Leckagestrom ist jedoch bewusst gewollt vorgesehen, um, insbesondere als plötzlicher Druckstoß, Staub und Verunreinigungen aus den Dichtkörper herauszublasen. Der bewusst vorgesehene Leckagestrom kann den Druckkörper reinigen und dadurch eine hohe Lebensdauer für den Dichtkörper erreichen. Die nachfolgend beschriebenen Weiterbildungen sind für alle vorstehenden Ausführungsformen des Radlagers geeignet.

Insbesondere ist in axialer Richtung zwischen der Dichtungsanordnung und den Wälzkörpern ein Staubschutzdeckel zum Abdecken der Wälzkörper vorgesehen, wobei insbesondere der Staubschutzdeckel mit dem Dichtpartner eine Labyrinthdichtung ausbildet. Der Staubschutzdeckel kann ein Eindringen von Verschmutzungen in den Bereich der Wälzlager verhindern. Dadurch können auch Verunreinigungen in dem Druckfluid, das als Leckage die Dichtkontaktstelle passieren konnte, nicht die Wälzlager erreichen. Insbesondere kann mit Hilfe des Staubschutzdeckels ein Strömungswege für den Leckagestrom des Druckfluids vorgegeben werden, der in der Art einer Labyrinthdichtung eine 180°-Kehre vorsieht, beispielsweise von radial nach innen nach radial außen oder umgekehrt. Dadurch kann die Leckage oder zumindest die schwereren Verunreinigungen des Leckagestroms in der 180°-Kehre zurückgehalten und gesammelt werden.

Vorzugsweise ist stromabwärts zum Dichtkontakt zwischen der Dichtungseinheit und dem Dichtpartner ein Sammelraum zur Sammlung und Rückführung von als Leckage an dem Dichtkontakt vorbeigeströmten Druckfluid vorgesehen. Der Sammelraum kann in einem Lagerring des Radlagers ausgebildet werden oder über einen in dem Lagerring des Radlagers ausgebildet Kanal erreicht werden. Dadurch kann sichergestellt werden, dass ein Leckagestrom oder Verunreinigungen in dem Leckagestrom nicht die Wälzkörper erreichen. Vorzugsweise kann das in dem Sammelraum gesammelte Druckfluid wieder rückgeführt werden, wodurch der Sammelraum zu einem Großteil geleert werden kann und auch nach einer langen Betriebszeit noch einen Leckagestrom zumindest zeitweise aufnehmen kann. Geeignete Leckagerückführungen sind in DE 10 2006 006 143 A1 beschrieben, auf deren Inhalt als Teil der Erfindung hiermit Bezug genommen wird.

Die Erfindung betrifft ferner eine Radlageranordnung zur Lagerung eines Kraftfahrzeugreifens eines Kraftfahrzeugs, insbesondere Lastkraftfahrzeug, mit einem, insbesondere zumindest in einem Teilbereich als Hohlwelle ausgestalteten, Lagerzapfen, einer auf dem Lagerzapfen aufgesteckten Radnabe zur Aufnahme eines Reifen des Kraftfahrzeugs, einem Radlager zur Lagerung der Radnabe an dem Lagerzapfen und einer Dichtungsanordnung, die wie vorstehend beschrieben aus- und weitergebildet sein kann, radialen Durchführung eines Druckfluids von dem Lagerzapfen zu dem Drucknutzraum, wobei die Dichtungsanordnung in axialer Richtung zwischen dem Radlager und einer Axialfläche des Lagerzapfens angeordnet ist. Die Dichtungsanordnung kann mit einem von dem Lagerzapfen ausgebildeten Einlass und einem von der Radnabe ausgebildeten Auslass kommunizieren, so dass die Drehdurchführung in axialer Richtung außerhalb des Radlagers ausgebildet sein kann. Die Dichtungsanordnung ist insbesondere in axialer Richtung neben einem Innenring und/oder neben einem Außenring des Radlagers angeordnet. Die Dichtungsanordnung kann in axialer Richtung neben einem die Wälzkörper vor Verschmutzung schützenden Dichtkörper angeordnet sein und dadurch einen weiteren Schutz vor Verschmutzung ausbilden. Das Radlager braucht dadurch nicht konstruktiv an die Ausbildung der Drehdurchführung mit Hilfe der Dichtungsanordnung angepasst sein. Der Lagerzapfen kann beispielsweise ein Sackloch aufweisen, an dem die Druckquelle angeschlossen ist und/oder von dem der Einlass in radialer Richtung abgehen kann. Die Dichtungsanordnung kann zwischen dem Radlager und der Axialfläche des Lagerzapfens axial fixiert sein. Insbesondere ist an dem von der Axialfläche abstehenden Ende des Lagerzapfens eine Wellenmutter aufgeschraubt, die das Radlager gegen die Dichtungsanordnung und damit die Dichtungsanordnung gegen die als Axialanschlag für die Dichtungsanordnung wirkende Axialfläche drückt. Ein axiales Spiel kann dadurch eliminiert werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht einer Drehdurchführung für ein Radlager,
Fig. 2: eine schematische Schnittansicht einer ersten Ausführungsform eines Radlagers mit der Drehdurchführung aus Fig. 1 zu einem ersten Zeitpunkt,
Fig. 3: eine schematische Schnittansicht des Radlagers aus Fig. 2 zu einem zweiten Zeitpunkt,
Fig. 4: eine schematische Schnittansicht des Radlagers aus Fig. 2 zu einem dritten Zeitpunkt,
Fig. 5: eine schematische Schnittansicht des Radlagers aus Fig. 2 zu einem vierten Zeitpunkt,
Fig. 6: eine schematische Schnittansicht einer zweiten Ausführungsform eines Radlagers,
Fig. 7: eine schematische Schnittansicht eines Details einer Dichtungsanordnung der Drehdurchführung aus Fig. 1,
Fig. 8: eine Schnittansicht eines Details einer alternativen Dichtungsanordnung der Drehdurchführung aus Fig. 1,
Fig. 9: eine schematische Schnittansicht einer dritten Ausführungsform eines Radlagers,
Fig. 10: eine schematische Schnittansicht einer vierten Ausführungsform eines Radlagers und
Fig. 11: eine schematische Schnittansicht eines Details einer fünften Ausführungsform eines Radlagers.

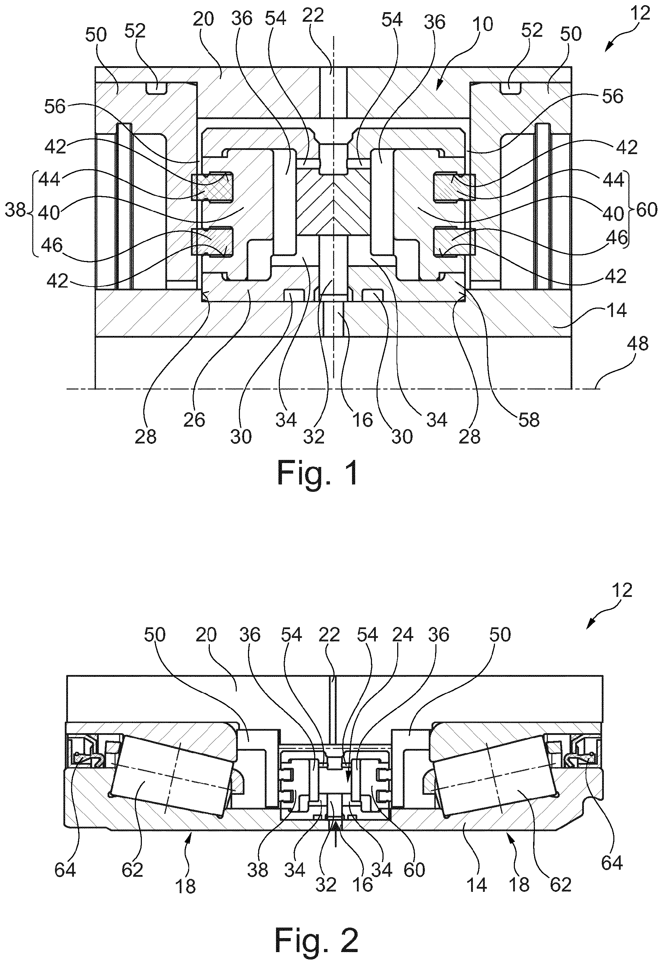

Die in Fig. 1 dargestellte Drehdurchführung 10 kann beispielsweise von einer radial innen angeschlossenen Druckquelle ein insbesondere als Druckluft vorliegendes Druckfluid durch ein Radlager 12 eines Kraftfahrzeugs hindurch in einen radial äußeren Drucknutzraum leiten, bei dem es sich um einen Reifenschlauch eines Kraftfahrzeugreifens handeln kann, um den für unterschiedliche Randbedingen jeweils unterschiedlichen optimalen Reifendruck einstellen zu können. Die Drehdurchführung 10 weist hierzu einen ersten Ring 14 auf, der einen in radialer Richtung verlaufenden Einlass 16 aufweist, über den der von der Druckquelle bereitgestellte Druck angelegt werden kann. Der erste Ring 14 kann hierbei durch den Innenring des Radlagers 12 ausgebildet sein. Das Radlager 12 ist beispielsweise zweireihig ausgestaltet ist und kann insbesondere zwei separate Wälzlager 18 aufweisen, die einen gemeinsamen Innenring oder separate Innenringe aufweisen. Die separaten Innenringe können insbesondere an ihren aufeinander zu weisenden Axialseiten jeweils eine Aussparung aufweisen, um gemeinsam den Einlass 16 auszubilden. Die Drehdurchführung 10 weist zudem einen zu dem ersten Ring 14 relativ drehbaren zweiten Ring 20 auf, der einen in radialer Richtung verlaufenden Auslass 22 aufweist, um das Druckfluid in den Drucknutzraum zu leiten. Der zweite Ring 20 kann hierbei durch den Außenring des Radlagers 12 ausgebildet sein. Analog zum ersten Ring 14 kann auch der zweite Ring 20 durch separate Außenringe der einzelnen Wälzlager 18 des mehrreihigen Radlagers 12 ausgebildet sein, wobei insbesondere die separaten Außenringe an ihren aufeinander zu weisenden Axialseiten jeweils eine Aussparung aufweisen können, um gemeinsam den Auslass 22 auszubilden. Der zweite Ring 14 kann auch separat zu den Außenringen des Radlagers 12 ausgestaltet sein und beispielsweise durch eine Nabe für den Reifen ausgebildet sein.

Um den ersten Ring 14 und den zweiten Ring 20 möglichst dicht und verschleißarm gegeneinander abzudichten, weist die Drehdurchführung 10 eine in radialer Richtung zwischen dem ersten Ring 14 und dem zweiten Ring 20 angeordnete Dichtungsanordnung 24 auf. Die im dargestellten Ausführungsbeispiel aus zwei spiegelbildlich ausgestalteten separaten Baugruppen zusammengesetzte Dichtungsanordnung 24 weist in der beispielsweise linken Baugruppe einen Dichtungshalter 26 auf, der einlassseitig mit dem ersten Ring 14 drehfest verbunden ist. Hierzu können beispielsweise die den ersten Ring 14 zusammensetzenden Innenringe der separaten Wälzlager 18 den Dichtungshalter 26 zwischen jeweils ausgebildeten Axialanschlägen 28 verklemmen und axial fixieren. Der Dichtungshalter 26 kann eine zum ersten Ring 14 hin geöffnete erste Dichtnut 30 aufweisen, in der beispielsweise ein nicht dargestellter O-Ring aufgenommen sein kann, um den Dichtungshalter 26 gegenüber dem ersten Ring 14 ausreichend abzudichten. Die Dichtungsanordnung 24 weist einen, insbesondere durch die beiden Baugruppen zusammengesetzten Verbindungskanal 32 auf, der sich an den Einlass 16 des ersten Rings 14 anschließt. Von dem Verbindungskanal 32 zweigt in axialer Richtung ein Einlasskanal 34 ab, der in einer Druckkammer 36 mündet. Die Druckkammer 36 ist an einer nach axial außen weisenden Seite von einer Dichtungseinheit 38 verschlossen, die innerhalb des Dichtungshalters 26 in axialer Richtung verlagert und/oder elastisch verformt werden kann. Die Dichtungseinheit 38 weist einen, insbesondere aus einem elastomeren Material hergestellten, Haltering 40 auf, der an seiner von der Druckkammer 36 weg weisenden Axialseite, insbesondere elastische, Aufnahmetaschen 42 aufweist, in denen jeweils ein eher verschleißfester unelastischer Abstützring 44 und ein eher elastischer Dichtring 46 eingesetzt sind. Zwischen der Aufnahmetasche 42 und dem aufgenommenen Ring 44, 46 kann eine Ausgleichsnut vorgesehen sein. Der Abstützring 44 und der Dichtring 46 sind im Wesentlichen konzentrisch zu einer Drehachse 48 des Radlagers 12 angeordnet, wobei die Drehdurchführung 10 und die Dichtungsanordnung 24 ebenfalls um diese Drehachse 48 rotieren können. Durch den Druck in der Druckkammer 36 kann der Haltering 40 der Dichtungseinheit 38 axial nach außen gedrückt werden, so dass der Abstützring 44 und der Dichtring 46 in axialer Richtung gegen einen Dichtpartner 50 gepresst werden, wodurch eine von dem Druck in der Druckkammer 36 abhängige ausreichende und sich automatisch an sich verändernde Druckverhältnisse anpassende Abdichtung erreicht wird. Der Dichtpartner 50 ist drehfest mit dem zweiten Ring 20 befestigt. Zudem weist der Dichtpartner 50 eine zum zweiten Ring 20 geöffnete zweite Dichtnut 52 auf, in der beispielsweise ein nicht dargestellter O-Ring, eingesetzt sein kann, um den Dichtpartner 50 gegenüber dem zweiten Ring 20 ausreichend abzudichten. Die Dichtungseinheit 38 dreht mit der Drehzahl des ersten Rings 14, während der Dichtpartner 50 mit der Drehzahl des zweiten Rings 20 dreht. Bei einem abrasiven Verschleiß des Abstützrings 44 und des Dichtrings 46 verringert sich die axiale Erstreckung des Abstützrings 44 und des Dichtrings 46. Die Dichtungseinheit 38 kann diesen Verschleiß jedoch automatisch ausgleichen, indem der Haltering 40 durch den Druck in der Druckkammer 36 stärker zum Dichtpartner 50 hin verlagert und/oder elastisch verformt wird.

Von der Druckkammer 36 geht ein Auslasskanal 54 ab, der einen deutlich geringeren Strömungsquerschnitt als der Einlasskanal 34 aufweist. Der Auslasskanal 54 kann dadurch in der Art einer Drossel beim Befüllen des Drucknutzraums das Druckfluid in der Druckkammer 36 stauen und einen Staudruck erzeugen. Die kinetische Energie des Druckfluids wird durch die Drosselwirkung des Einlasskanals 34 in eine Erhöhung des statischen Drucks in der Druckkammer 36 umgewandelt, wobei sich gegebenenfalls die Dichte des Druckfluids in der Druckkammer 36 erhöhen kann. Wenn das Druckfluid den Auslasskanal 54 passiert hat, kann das Druckfluid von dem Auslasskanal 54 zum Auslass 22 und zum Drucknutzraum fließen. Ein Teil des Druckfluids kann auch in einen zwischen dem Dichtpartner 50 und der Dichtungseinheit 38 ausgebildeten Gegendruckspalt 56 strömen und sich dort stauen. Dadurch kann der Anpressdruck der Dichtungseinheit 38 an dem Dichtpartner 50 reduziert werden.

Die zur rechten Seite hin abdichtende zweite Baugruppe der Dichtungsanordnung kann einen weiteren Dichtungshalter 58 mit einer weiteren Dichtungseinheit 60 aufweisen, die in dem dargestellten Ausführungsbeispiel spiegelbildlich symmetrisch zur ersten Baugruppe mit dem Dichtungshalter 26 und der Dichtungseinheit 38 ausgestaltet sind und analog funktionieren.

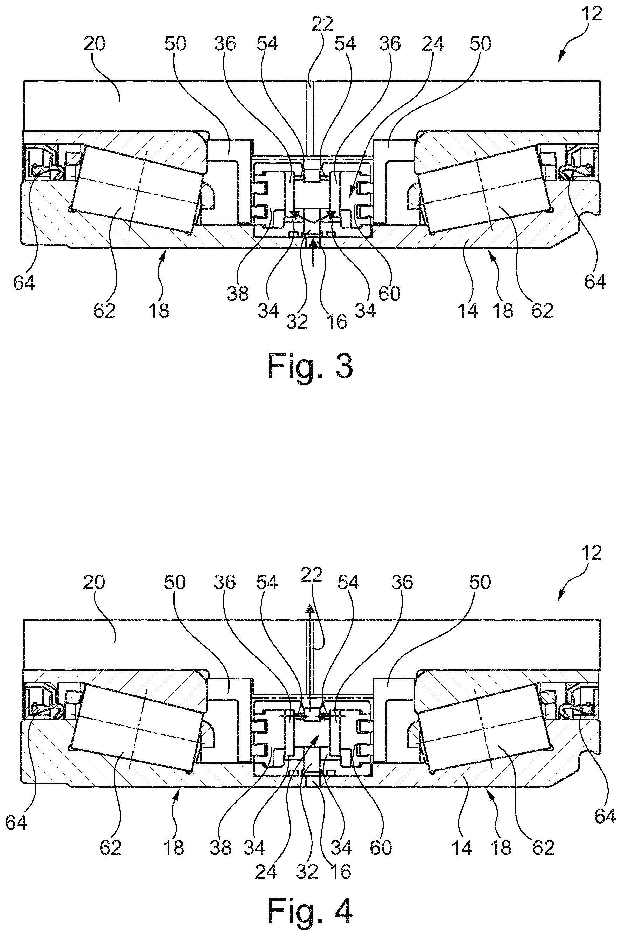

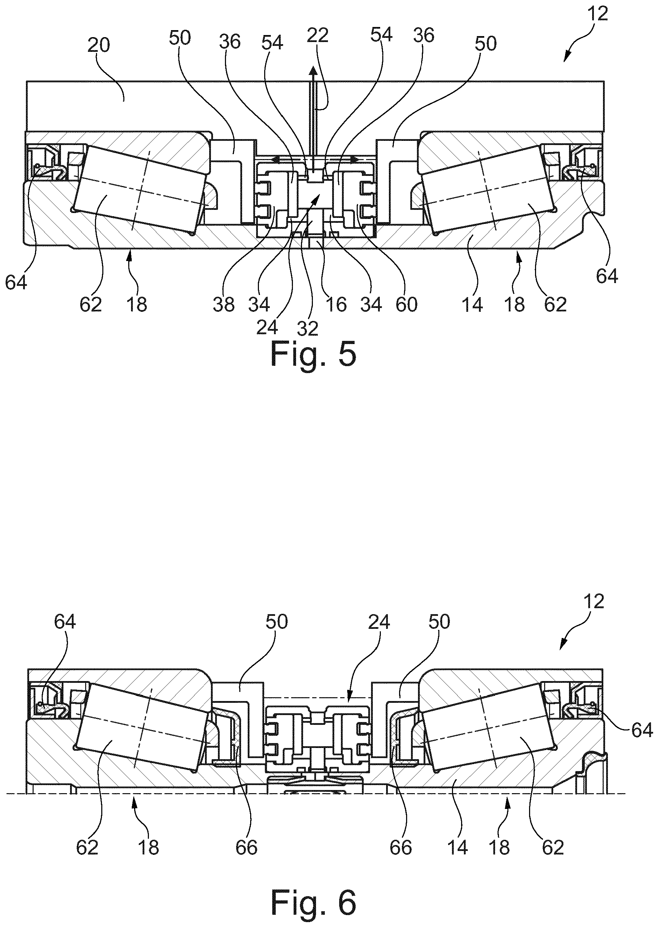

Wenn der Drucknutzraum mit einem Druckfluid zur Druckerhöhung gefüllt werden soll, kann zunächst das Druckfluid über den Einlass 16 von einer Druckquelle zugeführt werden, wie in Fig. 2 dargestellt. Anschließend kann das Druckfluid von dem Einlass 16 über den Verbindungskanal 32 auf die Einlasskanäle 34 verteilt werden und in den jeweils angeschlossene Druckkammer 36 eintreten, wie in Fig. 3 dargestellt. Durch den Druck in der Druckkammer 36 werden die Dichtungseinheiten 38, 60 gegen ihren jeweiligen Dichtpartner 50 gedrückt. Durch die Drosselwirkung des Auslasskanals 54 stellt sich aufgrund des dadurch erreichten Staudrucks ein entsprechend hoher Druck in der Druckkammer 36 ein, der zu einer guten Dichtwirkung zwischen den Dichtungseinheiten 38, 60 und dem jeweiligen Dichtpartner 50 führt. Wie in Fig. 4 dargestellt kann das Druckfluid schließlich über den Auslasskanal 54 die Druckkammer 36 verlassen und über den Auslass 22 in dem zweiten Ring 20, der durch eine Nabe des Kraftfahrzeugreifens ausgebildet sein kann, zu dem Drucknutzraum gelangen. Wie in Fig. 5 dargestellt kann jedoch auch ein Teil des Druckmediums über einen zwischen dem jeweiligen Dichtungshalter 26, 58 und dem zweiten Ring 20 ausgebildeten Spalt in den Gegendruckspalt 56 gelangen. Durch den mit Hilfe des Auslasskanals 54 erhöhten Druck in der Druckkammer 36 ist an der Dichtkontaktstelle zwischen der jeweiligen Dichtungseinheit 38, 60 und dem zugeordneten Dichtpartner 50 eine ausreichende Dichtwirkung gegeben, um eine Leckage zu vermeiden oder zumindest gering zu halten. Durch den allmählichen Druckausgleich zwischen der Druckquelle und dem Drucknutzraum kann sich der Druck in dem Gegendruckspalt 56 ebenfalls allmählich erhöhen und den Anpressdruck der Dichtungseinheiten 38, 60 an dem zugeordneten Dichtpartner 50 auf ein noch ausreichendes aber verschleißärmeres Ausmaß reduzieren.

Das Wälzlager 18 des Radlagers 12 kann zwischen dem Innenring und dem Außenring Wälzkörper 62 aufweisen. Ein Eindringen von Verschmutzungen kann durch einen beispielsweise als Kassettendichtung ausgestalteten Dichtkörper 64 vermieden werden, der an dem axialen Außenrand des Wälzlagers zwischen dem Innenring und dem Außenring angeordnet ist.

Bei der in Fig. 6 dargestellten Ausführungsform des Radlagers 12 ist im Vergleich zu der vorstehend beschriebenen Ausführungsform des Radlagers 12 zwischen dem Dichtpartner 50 und dem Wälzkörper 62 des jeweiligen Wälzlagers 18 ein Staubschutzdeckel 66 vorgesehen, der insbesondere mit dem selben Ring 14 verbunden ist, mit dem auch der jeweilige Dichtungshalter 26, 58 verbunden ist. Der Staubschutzdeckel 66 und der Dichtpartner 50 können dadurch eine Labyrinthdichtung ausbilden. Eine an der Dichtkontaktstelle der Dichtungsanordnung 24 vorbei gelangene Leckage kann dadurch nicht so leicht zu den Wälzkörpern 62 gelangen. Insbesondere können Feuchtigkeiten und/oder Verschmutzungen in der Leckage von dem Staubschutzdeckel 66 zurückgehalten werden.

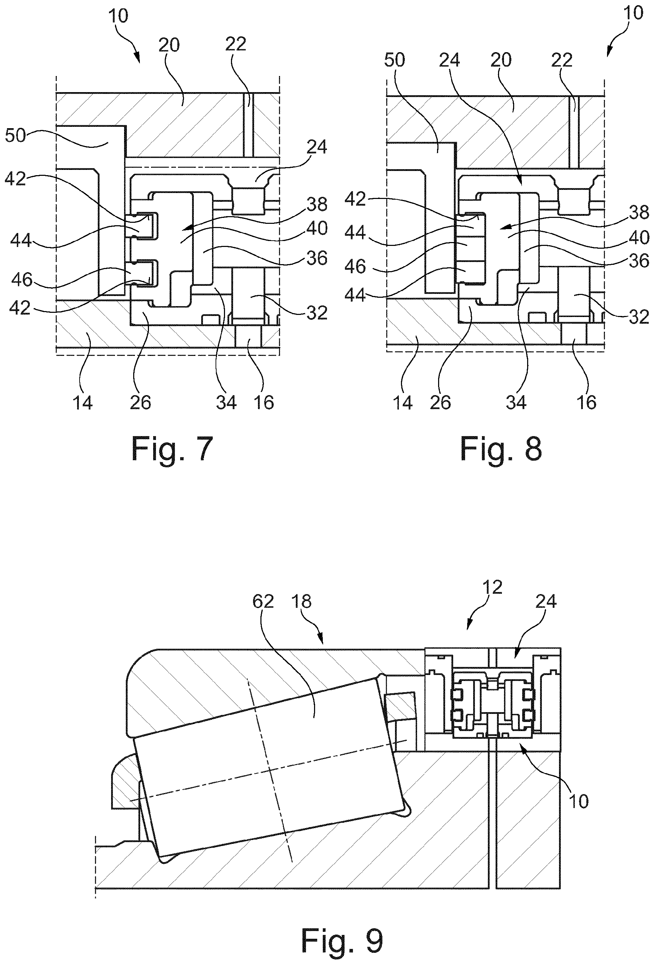

Wie in Fig. 7 dargestellt können der Abstützring 44 und der Dichtring 46 zueinander beabstandet in zueinander in radialer Richtung beabstandete separaten Aufnahmetaschen 42 aufgenommen sein. Wie in Fig. 8 dargestellt ist es jedoch auch möglich, dass der Abstützring 44 und der Dichtring 46 in radialer Richtung aneinander anliegend in einer gemeinsamen Aufnahmetaschen 42 aufgenommen sind, beispielsweise um bei einem vergleichbaren Bauraumbedarf mehrere Abstützringe 44 und/oder mehrere Dichtring 46 vorzusehen.

Wie in Fig. 9 dargestellt kann die Dichtungsanordnung 24 im Vergleich zu den vorstehend beschriebenen Ausführungsformen des Radlagers 12 anstelle des Dichtkörpers 64 am axial äußeren Randbereich mindestens eines Wälzlagers 18 des Radlagers 12 vorgesehen sein. Die ansonsten von dem Dichtkörper 64 bereitgestellte Schmutzschutzfunktion kann für dieses Wälzlager 18 von der Dichtungsanordnung 24 alleine übernommen werden, wodurch axialer Bauraum eingespart werden kann und der axiale bauraumbedarf entsprechend sinkt.

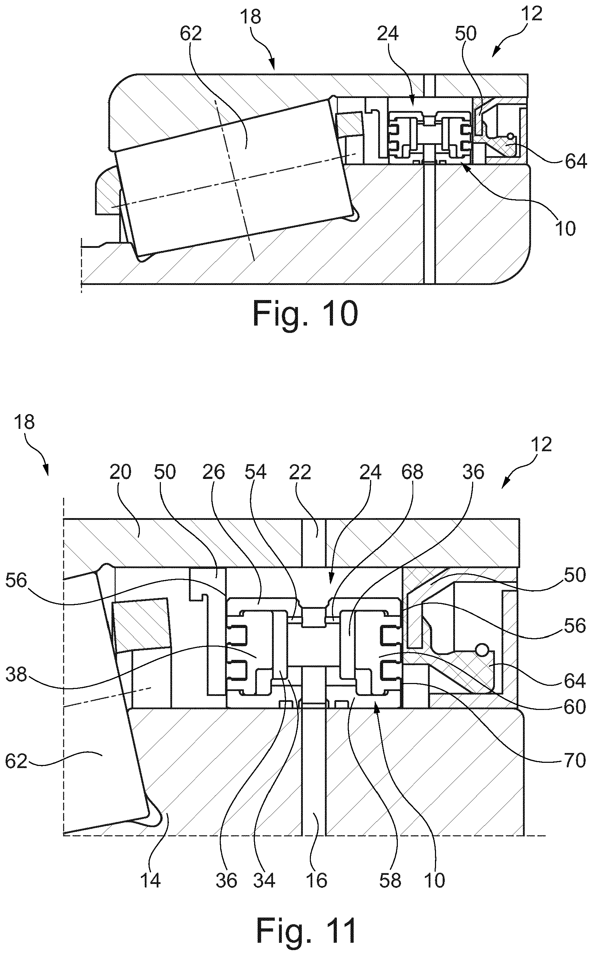

Wie in Fig. 10 dargestellt kann die Dichtungsanordnung 24 im Vergleich zu den vorstehend beschriebenen Ausführungsformen des Radlagers 12 in axialer Richtung zwischen dem Dichtkörper 64 und den Wälzkörpern 62 angeordnet sein, wodurch sich die Schutzwirkung gegen eine Verschmutzung der Wälzkörper 62 entsprechend erhöht. Hierbei ist es insbesondere möglich, dass ein Teil des Dichtkörpers 64 den Dichtpartner 50 ausbildet, so dass ein zum Dichtkörper 64 separater Dichtpartner 50 eingespart werden kann.

Bei der in Fig. 11 dargestellten Ausführungsform des Radlagers 12 ist im Vergleich zu der in Fig. 10 dargestellten Ausführungsform des Radlagers 12 der Einlasskanal 34 an der zum Dichtkörper 64 weisenden Seite nicht vorgesehen, sondern entfallen. Das heißt, im Vergleich zu der in Fig. 10 dargestellten Ausführungsform des Radlagers 12 ist der rechte Einlasskanal 34 verschlossen. Das zum Drucknutzraum gepumpte Druckfluid muss, um die rechte weitere Dichtungseinheit 60 anpressen zu können, zunächst über den Einlasskanal 34, die Druckkammer 36 und den Staudruck erzeugenden Auslasskanal 54 des linken Dichtungshalters 26 strömen, bevor das Druckfluid an der Ausgangsseite der Dichtungsanordnung 24 über eine ebenfalls einen deutlichen Strömungswiderstand ausbildende Drosselstelle 68 in die Druckkammer 36 des rechten weiteren Dichtungshalters 58 gelangen kann. Die Drosselstelle 68 kann hierbei vergleichbar oder identisch zu dem Auslasskanal 54 des linken Dichtungshalters 26 ausgestaltet sein. Der Druckaufbau in der Druckkammer 36 des rechten weiteren Dichtungshalters 58 kann dadurch soweit verzögert werden, dass das Druckfluid zwischen der weiteren Dichtungseinheit 60 und dem zugeordneten Dichtpartner 50 über einen bewusst in Verlängerung des Gegendruckspalts 56 vorgesehenen Leckagespalt 70 entlangströmen kann. Das Druckfluid kann dadurch mit einem entsprechend hohen Druck durch den Dichtkörper 64 nach außen strömen und hierbei in dem Dichtkörper 64 angesammelte Verunreinigungen mitreißen und wegblasen, wodurch der Dichtkörper 64 automatisch gereinigt werden kann. Wenn sich in der Druckkammer 36 des rechten weiteren Dichtungshalters 58 schließlich ein entsprechend hoher Druck einstellt, kann eine ausreichend dichte Abdichtung an dem Dichtkörper 64 erfolgen, so dass eine Leckage über den Leckagespalt 70 vermieden und der Leckagespalt 70 verschlossen werden kann.

### Bezugszeichenliste

- 10: Drehdurchführung
- 12: Radlager
- 14: erster Ring
- 16: Einlass
- 18: Wälzlager
- 20: zweiter Ring
- 22: Auslass
- 24: Dichtungsanordnung
- 26: Dichtungshalter
- 28: Axialanschlag
- 30: erste Dichtnut
- 32: Verbindungskanal
- 34: Einlasskanal
- 36: Druckkammer
- 38: Dichtungseinheit
- 40: Haltering
- 42: Aufnahmetasche
- 44: Abstützring
- 46: Dichtring
- 48: Drehachse
- 50: Dichtpartner
- 52: zweite Dichtnut
- 54: Auslasskanal
- 56: Gegendruckspalt
- 58: weiterer Dichtungshalter
- 60: weitere Dichtungseinheit
- 62: Wälzkörper
- 64: Dichtkörper
- 66: Staubschutzdeckel
- 68: Drosselstelle
- 70: Leckagespalt

## Patentansprüche

1. Dichtungsanordnung für ein Radlager (12) eines Kraftfahrzeugs, insbesondere Lastkraftfahrzeug, mit
einem eine Druckkammer (36) begrenzenden Dichtungshalter (26),
wobei der Dichtungshalter (26) einen mit einer Druckquelle und der Druckkammer (36) kommunizierbaren Einlasskanal (34) und
einen mit der Druckkammer (36) und einem Drucknutzraum, insbesondere Reifenschlauch eines Kraftfahrzeugreifens, kommunizierbaren Auslasskanal (54) aufweist,
und
einer im Wesentlichen koaxial zu einer Drehachse (48) des Radlagers (12) angeordneten Dichtungseinheit (38) zur Herstellung eines Dichtkontakts mit einem relativ zu dem Dichtungshalter (26) drehbaren Dichtpartner (50),
wobei die Dichtungseinheit (38) eine axiale Stirnseite der Druckkammer (36) begrenzt und relativ zu dem Dichtungshalter (26) in axialer Richtung verlagerbar und/oder elastisch verformbar ausgestaltet ist,
wobei der Strömungsquerschnitt des Auslasskanals (54) dimensioniert ist bei einer Förderung eines Druckfluids von der Druckquelle zu dem Drucknutzraum in der Druckkammer (36) einen Staudruck zum dichtenden Anpressen der Dichtungseinheit (38) an den Dichtpartner (50) herbeizuführen,
**dadurch gekennzeichnet, dass**
die Dichtungseinheit (38) einen im Wesentlichen koaxial zu der Drehachse (48) des Radlagers (12) angeordneten direkt an dem Dichtpartner (50) anliegbaren Abstützring (44) zur Abtragung axialer Kräfte und einen im Wesentlichen koaxial zu der Drehachse (48) des Radlagers (12) angeordneten direkt an dem Dichtpartner (50) anliegbaren Dichtring (46) zur Bereitstellung eines Dichtkontakts mit dem Dichtpartner (50) durch eine elastische Verformung aufweist, und
wobei der Abstützring (44) und der Dichtring (46) in einem im Wesentlichen koaxial zu der Drehachse (48) des Radlagers (12) angeordneten Haltering (40) zueinander in radialer Richtung beabstandet oder in radialer Richtung aneinander anliegend aufgenommen sind.

2. Dichtungsanordnung nach Anspruch 1 **dadurch gekennzeichnet, dass** zwischen dem, insbesondere aus einem elastomeren Material hergestellten, Haltering (40) einerseits und dem Abstützring (44) und/oder dem Dichtring (46) andererseits eine Entlastungsnut ausgebildet ist.

3. Dichtungsanordnung nach Anspruch 1 oder 2 **dadurch gekennzeichnet, dass** der Abstützring (44) und/oder der Dichtring (46) in einer elastischen Aufnahmetasche (42) der Dichtungseinheit (38) aufgenommen ist.

4. Dichtungsanordnung nach einem der Ansprüche 1 bis 3 **dadurch gekennzeichnet, dass** die Dichtungseinheit (38) im an dem Dichtpartner (50) angepressten Zustand zwischen einem Teil der Dichtungseinheit (38) und dem Dichtpartner (50) einen Gegendruckspalt (56) ausbildet, wobei der Gegendruckspalt (56), insbesondere stromabwärts zum Auslasskanal (54), mit dem Auslasskanal (54) und/oder mit dem Drucknutzraum kommuniziert.

5. Dichtungsanordnung nach einem der Ansprüche 1 bis 4 **dadurch gekennzeichnet, dass** die Dichtungseinheit (38) unterhalb eines Grenzdrucks p in der Druckkammer (36) von p ≤ 2,0 bar, insbesondere p ≤ 1,8 bar, vorzugsweise p ≤ 1,5 bar und besonders bevorzugt p ≤ 1,2 bar von dem Dichtpartner (50) abgehoben positioniert ist.

6. Dichtungsanordnung nach einem der Ansprüche 1 bis 5 **dadurch gekennzeichnet, dass** die Dichtungseinheit (38) zur Abdichtung in einer ersten Axialrichtung vorgesehen ist, wobei ein zum Dichtungshalter (26) symmetrisch, spiegelbildlich und/oder analog ausgestalteter weiterer Dichtungshalter (58) und eine zur Dichtungseinheit (38) symmetrisch, spiegelbildlich und/oder analog ausgestaltete weitere Dichtungseinheit (60) zur Abdichtung in einer zur ersten Axialrichtung entgegengesetzten zweiten Axialrichtung vorgesehen sind, wobei insbesondere zwischen dem Dichtungshalter (26) und dem weiteren Dichtungshalter (58) ein mit dem mindestens einen Einlasskanal (34) und der Druckquelle kommunizierbarer Verbindungskanal (32) ausgebildet ist.

7. Radlager zur Lagerung eines Kraftfahrzeugreifens eines Kraftfahrzeugs, insbesondere Lastkraftfahrzeug, mit
einem, insbesondere inneren, ersten Lagerring,
einem, insbesondere äußeren, zweiten Lagerring,
zwischen dem ersten Lagerring und dem zweiten Lagerring angeordneten Wälzkörpern (62) zur relativ drehbaren Lagerung des ersten Lagerrings zum zweiten Lagerring und
einer zwischen dem ersten Lagerring und dem zweiten Lagerring angeordneten Dichtungsanordnung (24) nach einem der Ansprüche 1 bis 6 zur radialen Durchführung eines Druckfluids,
wobei der Dichtungshalter (26) mit dem ersten Lagerring und der Dichtpartner (50) mit dem zweiten Lagerring drehfest befestigt ist und wobei der erste Lagerring einen mit dem Einlasskanal (34) und der Druckquelle kommunizierbaren Einlass (16) und der zweite Lagerring einen mit dem Auslasskanal (54) und dem Drucknutzraum kommunizierbaren Auslass (22) aufweist.

8. Radlager nach Anspruch 7 **dadurch gekennzeichnet, dass** ein weiterer erster Lagerring, ein weiterer zweiter Lagerring und zwischen dem weiteren ersten Lagerring und dem weiteren zweiten Lagerring angeordnete weitere Wälzkörper (62) zur relativ drehbaren Lagerung des weiteren ersten Lagerrings zum weiteren zweiten Lagerring vorgesehen sind, wobei die Dichtungsanordnung (24) zwischen dem ersten Lagerring und dem weiteren ersten Lagerring axial fixiert ist.

9. Radlager nach Anspruch 7 **dadurch gekennzeichnet, dass** zwischen dem ersten Lagerring und dem zweiten Lagerring ein, insbesondere als Kassettendichtung oder Radialwellendichtring ausgestalteter, Dichtkörper (64) zum Schutz der Wälzkörper (62) vor äußeren Verschmutzungen vorgesehen ist, wobei die Dichtungsanordnung (24) in axialer Richtung zwischen den Wälzkörpern (62) und dem Dichtkörper (64) angeordnet ist, wobei insbesondere die Dichtungsanordnung (24) an dem Dichtkörper (64) axial abgestützt ist und/oder der Dichtkörper (64) den Dichtpartner (50) ausbildet.

10. Radlager zur Lagerung eines Kraftfahrzeugreifens eines Kraftfahrzeugs, insbesondere Lastkraftfahrzeug, mit
einem, insbesondere inneren, ersten Lagerring,
einem, insbesondere äußeren, zweiten Lagerring,
zwischen dem ersten Lagerring und dem zweiten Lagerring angeordneten Wälzkörpern (62) zur relativ drehbaren Lagerung des ersten Lagerrings zum zweiten Lagerring,
einem zwischen dem ersten Lagerring und dem zweiten Lagerring, insbesondere als Kassettendichtung oder Radialwellendichtring ausgestalteter, Dichtkörper (64) zum Schutz der Wälzkörper (62) vor äußeren Verschmutzungen,
einer in radialer Richtung zwischen dem ersten Lagerring und dem zweiten Lagerring und in axialer Richtung zwischen den Wälzkörpern (62) und dem Dichtkörper (64) angeordneten Dichtungsanordnung (24) nach einem der Ansprüche 1 bis 5 zur radialen Durchführung eines Druckfluids, wobei die Dichtungseinheit (38) zur Abdichtung in einer zu den Wälzkörpern (62) weisenden Axialrichtung vorgesehen ist,
wobei die Dichtungsanordnung (24) einen eine weitere Druckkammer (36) begrenzenden weiteren Dichtungshalter (58) und einer im Wesentlichen koaxial zu einer Drehachse (48) des Radlagers (12) angeordneten weiteren Dichtungseinheit (60) zur Herstellung eines Dichtkontakts mit dem relativ zu dem weiteren Dichtungshalter (58) drehbaren Dichtkörper (64) oder einem dem Dichtungskörper (64) zugewandten relativ zu dem weiteren Dichtungshalter (58) drehbaren weiteren Dichtpartner (50) aufweist,
wobei die weitere Druckkammer (36) nur mit dem Auslasskanal (54) und dem Drucknutzraum über eine, insbesondere als weiteren Auslasskanal (54) ausgestaltete, einen Staudruck erzeugende Drosselstelle (68) kommuniziert und unterhalb eines Grenzdrucks in der weiteren Druckkammer (36) zwischen der weiteren Dichtungseinheit (60) einerseits und dem Dichtkörper (64) oder dem weiteren Dichtpartner (50) andererseits ein mit dem Auslasskanal (54) und dem Drucknutzraum kommunizierender Leckagespalt zur Abfuhr eines Teils des Druckfluids in den Dichtkörper (64) ausgebildet ist.

11. Radlager nach einem der Ansprüche 7 bis 10 **dadurch gekennzeichnet, dass** in axialer Richtung zwischen der Dichtungsanordnung (24) und den Wälzkörpern (62) ein Staubschutzdeckel (66) zum Abdecken der Wälzkörper (62) vorgesehen ist, wobei insbesondere der Staubschutzdeckel (66) mit dem Dichtpartner (50) eine Labyrinthdichtung ausbildet.

12. Radlager nach einem der Ansprüche 7 bis 11 **dadurch gekennzeichnet, dass** stromabwärts zum Dichtkontakt zwischen der Dichtungseinheit (38) und dem Dichtpartner (50) ein Sammelraum zur Sammlung und Rückführung von als Leckage an dem Dichtkontakt vorbeigeströmten Druckfluid vorgesehen ist.

13. Radlageranordnung zur Lagerung eines Kraftfahrzeugreifens eines Kraftfahrzeugs, insbesondere Lastkraftfahrzeug, mit
einem, insbesondere zumindest in einem Teilbereich als Hohlwelle ausgestalteten, Lagerzapfen,
einer auf dem Lagerzapfen aufgesteckten Radnabe zur Aufnahme eines Reifen des Kraftfahrzeugs,
einem Radlager (12) zur Lagerung der Radnabe an dem Lagerzapfen und
einer Dichtungsanordnung (24) nach einem der Ansprüche 1 bis 6 zur radialen Durchführung eines Druckfluids von dem Lagerzapfen zu dem Drucknutzraum,
wobei die Dichtungsanordnung (24) in axialer Richtung zwischen dem Radlager (12) und einer Axialfläche des Lagerzapfens angeordnet ist.

## Claims

1. Seal arrangement for a wheel bearing (12) of a motor vehicle, in particular a heavy goods vehicle, with a seal holder (26) which delimits a pressure chamber (36),
the seal holder (26) having an inlet duct (34) which can communicate with a pressure source and the pressure chamber (36), and
an outlet duct (54) which can communicate with the pressure chamber (36) and a useful pressure space, in particular an inner tube of a motor vehicle tyre, and with
a seal unit (38) which is arranged substantially coaxially with respect to a rotational axis (48) of the wheel bearing (12) for establishing a sealing contact with a sealing partner (50) which can be rotated relative to the seal holder (26),
the seal unit (38) delimiting an axial end side of the pressure chamber (36) and being configured such that it can be deformed elastically and/or moved in the axial direction relative to the seal holder (26),
the flow cross section of the outlet duct (54) being dimensioned, in the case of a delivery of a pressure fluid from the pressure source to the useful pressure space, to bring about a dynamic pressure in the pressure chamber (36) for pressing the seal unit (38) sealingly onto the sealing partner (50),
**characterized in that** the seal unit (38) has a supporting ring (44), which is arranged substantially coaxially with respect to the rotational axis (48) of the wheel bearing (12) and can bear directly against the sealing partner (50), for the transfer of axial forces and a sealing ring (46), which is arranged substantially coaxially with respect to the rotational axis (48) of the wheel bearing (12) and can bear directly against the sealing partner (50), for the provision of a sealing contact with the sealing partner (50) by way of an elastic deformation, and
the supporting ring (44) and the sealing ring (46) being received, such that they are spaced apart from one another in the radial direction or bear against one another in the radial direction, in a retaining ring (40) which is arranged substantially coaxially with respect to the rotational axis (48) of the wheel bearing (12).

2. Seal arrangement according to Claim 1, **characterized in that** a relief groove is configured between firstly the retaining ring (40), which is produced, in particular, from an elastomeric material, and secondly the supporting ring (44) and/or the sealing ring (46).

3. Seal arrangement according to Claim 1 or 2, **characterized in that** the supporting ring (44) and/or the sealing ring (46) are/is received in an elastic receiving pocket (42) of the seal unit (38).

4. Seal arrangement according to one of Claims 1 to 3, **characterized in that**, in the state in which it is pressed onto the sealing partner (50), the seal unit (38) configures a counterpressure gap (56) between a part of the seal unit (38) and the sealing partner (50), the counterpressure gap (56) communicating, in particular downstream of the outlet duct (54), with the outlet duct (54) and/or with the useful pressure space.

5. Seal arrangement according to one of Claims 1 to 4, **characterized in that** the seal unit (38) is positioned lifted up from the sealing partner (50) below a limit pressure p in the pressure chamber (36) of p ≤ 2.0 bar, in particular p ≤ 1.8 bar, preferably p ≤ 1.5 bar and particularly preferably p ≤ 1.2 bar.

6. Seal arrangement according to one of Claims 1 to 5, **characterized in that** the seal unit (38) is provided for sealing in a first axial direction, a further seal holder (58), which is of symmetrical, mirror-inverted and/or analogous configuration with respect to the seal holder (26), and a further seal unit (60), which is of symmetrical, mirror-inverted and/or analogous configuration with respect to the seal unit (38), being provided for sealing in a second axial direction which is opposed to the first axial direction, a connecting duct (32) which can communicate with the at least one inlet duct (34) and the pressure source being configured, in particular, between the seal holder (26) and the further seal holder (58).

7. Wheel bearing for mounting a motor vehicle tyre of a motor vehicle, in particular a heavy goods vehicle, with
a first bearing ring which is, in particular, on the inside,
a second bearing ring which is, in particular, on the outside,
rolling bodies (62), which are arranged between the first bearing ring and the second bearing ring, for the relatively rotatable mounting of the first bearing ring with respect to the second bearing ring, and
a seal arrangement (24) according to one of Claims 1 to 6, which is arranged between the first bearing ring and the second bearing ring, for conducting through a pressure fluid radially,
the seal holder (26) being fastened fixedly to the first bearing ring for conjoint rotation, and the sealing partner (50) being fastened fixedly to the second bearing ring for conjoint rotation, and the first bearing ring having an inlet (16) which can communicate with the inlet duct (34) and the pressure source, and the second bearing ring having an outlet (22) which can communicate with the outlet duct (54) and the useful pressure space.

8. Wheel bearing according to Claim 7, **characterized in that** a further first bearing ring, a further second bearing ring, and further rolling bodies (62), which are arranged between the further first bearing ring and the further second bearing ring, for the relatively rotatable mounting of the further first bearing ring with respect to the further second bearing ring, are provided, the seal arrangement (24) being fixed axially between the first bearing ring and the further first bearing ring.

9. Wheel bearing according to Claim 7, **characterized in that** a sealing body (64) which is configured, in particular, as a cassette seal or a radial shaft sealing ring is provided between the first bearing ring and the second bearing ring for the protection of the rolling bodies (62) against external contaminants, the seal arrangement (24) being arranged in the axial direction between the rolling bodies (62) and the sealing body (64), the seal arrangement (24) being, in particular, supported axially on the sealing body (64), and/or the sealing body (64) configuring the sealing partner (50).

10. Wheel bearing for mounting a motor vehicle tyre of a motor vehicle, in particular a heavy goods vehicle, with
a first bearing ring which is, in particular, on the inside,
a second bearing ring which is, in particular, on the outside,
rolling bodies (62), which are arranged between the first bearing ring and the second bearing ring, for the relatively rotatable mounting of the first bearing ring with respect to the second bearing ring,
a sealing body (64) which is configured between the first bearing ring and the second bearing ring, in particular as a cassette seal or a radial shaft sealing ring, for the protection of the rolling bodies (62) against external contaminants,
a seal arrangement (24) according to one of Claims 1 to 5, which is arranged in the radial direction between the first bearing ring and the second bearing ring and in the axial direction between the rolling bodies (62) and the sealing body (64), for conducting through a pressure fluid radially, the seal unit (38) being provided for sealing in an axial direction which points towards the rolling bodies (62),
the seal arrangement (24) having a further seal holder (58), which delimits a further pressure chamber (36), and a further seal unit (60), which is arranged substantially coaxially with respect to a rotational axis (48) of the wheel bearing (12), for establishing a sealing contact with the sealing body (64), which can be rotated relative to the further seal holder (58), or with a further sealing partner (50), which faces the sealing body (64) and can be rotated relative to the further seal holder (58),
the further pressure chamber (36) communicating only with the outlet duct (54) and the useful pressure space via a throttle point (68) which generates a dynamic pressure and is configured, in particular, as a further outlet duct (54), and
a leakage gap which communicates with the outlet duct (54) and the useful pressure space being configured between firstly the further seal unit and secondly the sealing body (64) or the further sealing partner (50) for the discharge of a part of the pressure fluid into the sealing body (64) below a limit pressure in the further pressure chamber (36) .

11. Wheel bearing according to one of Claims 7 to 10, **characterized in that** a dust protection cover (66) for covering the rolling bodies (62) is provided in the axial direction between the seal arrangement (24) and the rolling bodies (62), the dust protection cover (66) configuring, in particular, a labyrinth seal with the sealing partner (50).

12. Wheel bearing according to one of Claims 7 to 11, **characterized in that** a collecting space for collecting and returning pressure fluid which has flowed past the sealing contact as leakage is provided downstream of the sealing contact between the seal unit (38) and the sealing partner (50).

13. Wheel bearing arrangement for mounting a motor vehicle tyre of a motor vehicle, in particular a heavy goods vehicle, with
a bearing journal which is configured, in particular, as a hollow shaft at least in one part region,
a wheel hub which is plugged onto the bearing journal for receiving a tyre of the motor vehicle,
a wheel bearing (12) for mounting the wheel hub on the bearing journal, and
a seal arrangement (24) according to one of Claims 1 to 6 for conducting through a pressure fluid radially from the bearing journal to the useful pressure space,
the seal arrangement (24) being arranged in the axial direction between the wheel bearing (12) and an axial face of the bearing journal.

## Revendications

1. Ensemble d'étanchéité pour un palier de roue (12) d'un véhicule automobile, en particulier d'un poids-lourd, comportant
un support de joint d'étanchéité (26) délimitant une chambre sous pression (36),
le support de joint d'étanchéité (26) comprenant un canal d'entrée (34) pouvant communiquer avec une source de pression et la chambre sous pression (36) et
un canal de sortie (54) pouvant communiquer avec la chambre sous pression (36) et un espace utile sous pression, en particulier une chambre à air d'un pneu de véhicule automobile,
et
une unité d'étanchéité (38) disposée sensiblement coaxialement à un axe de rotation (48) du palier de roue (12) et servant à réaliser un contact d'étanchéité avec un élément d'étanchéité complémentaire (50) rotatif par rapport au support de joint d'étanchéité (26),
l'unité d'étanchéité (38) délimitant un côté frontal axial de la chambre sous pression (36) et étant configurée de manière déplaçable par rapport au support de joint d'étanchéité (26) dans la direction axiale et/ou de manière déformable élastiquement,
la section transversale d'écoulement du canal de sortie (54) étant dimensionnée pour, en cas de refoulement d'un fluide sous pression à partir de la source de pression jusqu'à l'espace utile sous pression, provoquer une contre-pression dans la chambre sous pression (36) pour presser de manière étanche l'unité d'étanchéité (38) contre l'élément d'étanchéité complémentaire (50), **caractérisé en ce que**
l'unité d'étanchéité (38) comprend une bague de support (44) disposée sensiblement coaxialement à l'axe de rotation (48) du palier de roue (12) et pouvant s'appuyer directement contre l'élément d'étanchéité complémentaire (50) pour évacuer des forces axiales et une bague d'étanchéité (46) disposée sensiblement coaxialement à l'axe de rotation (48) du palier de roue (12) et pouvant s'appuyer directement contre l'élément d'étanchéité complémentaire (50) pour produire un contact d'étanchéité avec l'élément d'étanchéité complémentaire (50) par une déformation élastique, et
la plaque de support (44) et la bague d'étanchéité (46) étant reçues dans une bague de retenue (40) disposée sensiblement coaxialement à l'axe de rotation (48) du palier de roue (12) de manière espacée l'une de l'autre dans la direction radiale ou en appui l'une contre l'autre dans la direction radiale.

2. Ensemble d'étanchéité selon la revendication 1, **caractérisé en ce qu'**une rainure de décharge est formée entre la bague de retenue (40) réalisée en particulier à partir d'un matériau élastomère d'une part et la bague de support (44) et/ou la bague d'étanchéité (46) d'autre part.

3. Ensemble d'étanchéité selon la revendication 1 ou 2, **caractérisé en ce que** la bague de support (44) et/ou la bague d'étanchéité (46) sont reçues dans une cavité de réception élastique (42) de l'unité d'étanchéité (38).

4. Ensemble d'étanchéité selon l'une des revendications 1 à 3, **caractérisé en ce que** l'unité d'étanchéité (38) forme, dans l'état pressé contre l'élément d'étanchéité complémentaire (50), un interstice de contre-pression (56) entre une partie de l'unité d'étanchéité (38) et l'élément d'étanchéité complémentaire (50), l'interstice de contre-pression (56) communiquant avec le canal de sortie (54) et/ou avec l'espace utile sous pression, en particulier en aval du canal de sortie (54).

5. Ensemble d'étanchéité selon l'une des revendications 1 à 4, **caractérisé en ce que** l'unité d'étanchéité (38) est positionnée de manière soulevée de l'élément d'étanchéité complémentaire (50) en dessous d'une pression limite p dans la chambre sous pression (36) de p ≤ 2,0 bars, en particulier p ≤ 1,8 bar, de préférence p ≤ 1,5 bar et de manière particulièrement préférée p ≤ 1,2 bar.

6. Ensemble d'étanchéité selon l'une des revendications 1 à 5, **caractérisé en ce que** l'unité d'étanchéité (38) est prévue pour réaliser l'étanchéité dans une première direction axiale, un autre support de joint d'étanchéité (58) configuré de manière symétrique, en symétrie miroir et/ou de manière analogue par rapport au support de joint d'étanchéité (26) et une autre unité d'étanchéité (60) configurée de manière symétrique, en symétrie miroir et/ou de manière analogue par rapport à l'unité d'étanchéité (38) étant prévus pour réaliser l'étanchéité dans une deuxième direction axiale opposée à la première direction axiale, un canal de liaison (32) pouvant communiquer avec l'au moins un canal d'entrée (34) et la source de pression étant réalisé en particulier entre le support de joint d'étanchéité (26) et l'autre support de joint d'étanchéité (58).

7. Palier de roue servant au montage d'un pneu d'un véhicule automobile, en particulier d'un poids-lourd, comportant
une première bague de palier, en particulier intérieure, une deuxième bague de palier, en particulier extérieure, des corps de roulement (62) disposés entre la première bague de palier et la deuxième bague de palier pour le montage rotatif relatif de la première bague de palier par rapport à la deuxième bague de palier et
un ensemble d'étanchéité (24), disposé entre la première bague de palier et la deuxième bague de palier, selon l'une des revendications 1 à 6 pour le passage radial d'un fluide sous pression,
le support de joint d'étanchéité (26) étant fixé de manière solidaire en rotation à la première bague de palier et l'élément d'étanchéité complémentaire (50) étant fixé de manière solidaire en rotation à la deuxième bague de palier et la première bague de palier comprenant une entrée (16) pouvant communiquer avec le canal d'entrée (34) et la source de pression et la deuxième bague de palier comprenant une sortie (22) pouvant communiquer avec le canal de sortie (54) et l'espace utile sous pression.

8. Palier de roue selon la revendication 7, **caractérisé en ce qu'**une autre première bague de palier, une autre deuxième bague de palier et des autres corps de roulement (62) disposés entre l'autre première bague de palier et l'autre deuxième bague de palier pour le montage rotatif relatif de l'autre première bague de palier par rapport à l'autre deuxième bague de palier sont prévus, l'ensemble d'étanchéité (24) étant fixé axialement entre la première bague de palier et l'autre première bague de palier.

9. Palier de roue selon la revendication 7, **caractérisé en ce qu'**un corps d'étanchéité (64) configuré en particulier sous forme de joint cassette ou de bague d'étanchéité d'arbre radiale et servant à protéger les corps de roulement (62) contre des salissures extérieures est prévu entre la première bague de palier et la deuxième bague de palier, l'ensemble d'étanchéité (24) étant disposé entre les corps de roulement (62) et le corps d'étanchéité (64) dans la direction axiale, l'ensemble d'étanchéité (24) étant en particulier supporté axialement sur le corps d'étanchéité (64) et/ou le corps d'étanchéité (64) formant l'élément d'étanchéité complémentaire (50).

10. Palier de roue servant au montage d'un pneu d'un véhicule automobile, en particulier d'un poids-lourd, comportant
une première bague de palier, en particulier intérieure, une deuxième bague de palier, en particulier extérieure, des corps de roulement (62) disposés entre la première bague de palier et la deuxième bague de palier pour le montage rotatif relatif de la première bague de palier par rapport à la deuxième bague de palier,
un corps d'étanchéité (64) configuré en particulier sous forme de joint cassette ou de bague d'étanchéité d'arbre radiale entre la première bague de palier et la deuxième bague de palier et servant à protéger les corps de roulement (62) contre des salissures extérieures,
un ensemble d'étanchéité (24), disposé entre la première bague de palier et la deuxième bague de palier dans la direction radiale et entre les corps de roulement (62) et le corps d'étanchéité (64) dans la direction axiale, selon l'une des revendications 1 à 5 pour le passage radial d'un fluide sous pression, l'unité d'étanchéité (38) étant prévue pour réaliser l'étanchéité dans une direction axiale tournée vers les corps de roulement (62), l'ensemble d'étanchéité (24) comprenant un autre support de joint d'étanchéité (58) délimitant une autre chambre sous pression (36) et une autre unité d'étanchéité (60) disposée sensiblement coaxialement à un axe de rotation (48) du palier de roue (12) pour la réalisation d'un contact d'étanchéité avec le corps d'étanchéité (64) rotatif par rapport à l'autre support de joint d'étanchéité (58) ou un autre élément d'étanchéité complémentaire (50) tourné vers le corps d'étanchéité (64) et rotatif par rapport à l'autre support de joint d'étanchéité (58),
l'autre chambre sous pression (36) ne communiquant qu'avec le canal de sortie (54) et l'espace utile sous pression par le biais d'un point d'étranglement (68) configuré en particulier sous la forme d'un autre canal de sortie (54) et générant une contre-pression et, en dessous d'une pression limite dans l'autre chambre sous pression (36), un interstice de fuite communiquant avec le canal de sortie (54) et l'espace utile sous pression et servant à l'évacuation d'une partie du fluide sous pression dans le corps d'étanchéité (64) étant formé entre l'autre unité d'étanchéité (60) d'une part et le corps d'étanchéité (64) ou l'autre élément d'étanchéité complémentaire (50) d'autre part.

11. Palier de roue selon l'une des revendications 7 à 10, **caractérisé en ce qu'**un couvercle de protection contre la poussière (66) servant à recouvrir les corps de roulement (62) est prévu dans la direction axiale entre l'ensemble d'étanchéité (24) et les corps de roulement (62), le couvercle de protection contre la poussière (66) formant en particulier avec l'élément d'étanchéité complémentaire (50) un joint à labyrinthe.

12. Palier de roue selon l'une des revendications 7 à 11, **caractérisé en ce qu'**un espace de collecte servant à la collecte et à la recirculation de fluide sous pression s'écoulant devant le contact d'étanchéité en tant que fuite est prévu en aval du contact d'étanchéité entre l'unité d'étanchéité (38) et l'élément d'étanchéité complémentaire (50).

13. Palier de roue servant au montage d'un pneu d'un véhicule automobile, en particulier d'un poids-lourd, comportant
un tourillon de palier configuré sous forme d'arbre creux en particulier au moins dans une région partielle,
un moyeu de roue enfiché sur le tourillon de palier et servant à recevoir un pneu du véhicule automobile,
un palier de roue (12) servant au montage du moyeu de roue sur le tourillon de palier et
un ensemble d'étanchéité (24) selon l'une des revendications 1 à 6 servant au passage radial d'un fluide sous pression à partir du tourillon de palier jusqu'à l'espace utile sous pression,
l'ensemble d'étanchéité (24) étant disposé entre le palier de roue (12) et une surface axiale du tourillon de palier dans la direction axiale.
